# FASCICULE DE BREVET EUROPEEN

(11) **EP 3 900 170 B1**
(45) Date de publication et mention de la délivrance du brevet: **19.10.2022**
(21) Numéro de dépôt: 19848880.1
(22) Date de dépôt: 19.12.2019
(51) Int. Cl.: H02K 21/02, H02K 15/12

(54) **MACHINE ÉLECTRIQUE AVEC DISPOSITIF DE DÉMAGNÉTISATION FORCÉE DES AIMANTS PERMANENTS**
ELEKTRISCHE MASCHINE MIT VORRICHTUNG ZUM ZWANGSWEISEN ENTMAGNETISIEREN VON PERMANENTMAGNETEN
ELECTRIC MACHINE WITH DEVICE FOR FORCIBLY DEMAGNETISING PERMANENT MAGNETS

(30) Priorité: 20.12.2018 FR 1873641
(43) Date de publication de la demande: 27.10.2021
(73) Titulaire: Safran Helicopter Engines, 64510 Bordes (FR)
(72) Inventeur: SERGHINE, Camel, 77550 Moissy-Cramayel (FR); KLONOWSKI, Thomas, 77550 Moissy-Cramayel (FR); VIVE, Loïs, Pierre, Denis, 77550 Moissy-Cramayel (FR)
(74) Mandataire: Regimbeau
(86) Numéro de dépôt international: PCT/FR2019/053183
(87) Numéro de publication internationale: WO 2020/128348

(56) Documents cités:
- EP-A1- 0 573 658
- EP-A1- 2 200 161
- CN-A- 102 158 031
- US-A1- 2006 186 754

## Description

### DOMAINE TECHNIQUE DE L'INVENTION

L'invention concerne le domaine des machines électriques utilisées pour la génération d'énergie ou la motorisation d'un aéronef, en particulier de type hélicoptère, à décollage et atterrissage verticaux ou VTOL, à décollage et atterrissage courts ou STOL ou à propulsion électrique.

### ETAT DE LA TECHNIQUE

Il est courant d'embarquer des machines électriques dans les aéronefs à propulsion électrique ou hybride thermique/électrique Dans les architectures hybrides électriques, des génératrices électriques peuvent être entraînées par les systèmes de génération de puissance thermique de type turbines à gaz.

Afin de réduire la masse globale à bord, les machines électriques privilégiées pour ces applications sont les machines synchrones à aimants permanents qui présentent une densité massique de puissance élevée.

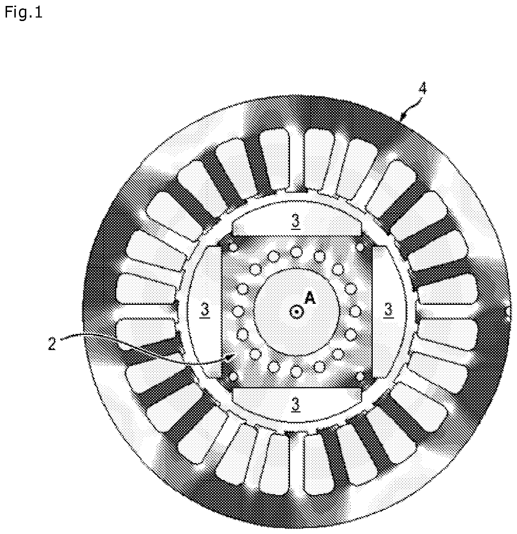

La **Figure 1** donne une vue en coupe transversale d'une machine synchrone à aimants permanents, par exemple embarquée dans un hélicoptère. La machine est ici du type à flux radial et présente une forme globale cylindrique d'axe A. Elle présente un rotor 2 mobile en rotation autour de l'axe A et positionné à l'intérieur d'un stator 4 fixe. Ici, la machine synchrone comporte quatre aimants permanents 3.

Dans cet exemple, les aimants 3 sont situés sur le rotor et font face à des bobinages positionnés sur la périphérie intérieure du stator.

Les aimants 3 forment deux paires de pôles magnétiques Nord/Sud. On connaît également des machines électriques présentant plus de trois paires de pôles magnétiques. En fonctionnement générateur de la machine électrique, la rotation forcée des aimants par rapport aux bobinages produit un flux magnétique excitateur, qui produit à son tour une force contre-électromotrice aux bornes des bobinages.

Dans la machine électrique de la Figure 1, en cas de court-circuit au niveau d'un bobinage, ou en cas d'autre événement réduisant brutalement l'impédance du bobinage, la tension aux bornes dudit bobinage ne diminue pas aussi rapidement que la résistivité, car les aimants permanents continuent de tourner.

L'intensité du courant électrique circulant dans le bobinage augmente donc très rapidement, exposant le bobinage à des risques de surchauffe, de fusion des isolants, etc. Ces risques sont inacceptables pour des applications aéronautiques où un très haut niveau de fiabilité des équipements est exigé.

Des solutions ont donc été recherchées pour protéger le bobinage d'une machine synchrone à aimants permanents, au cours d'un événement de court-circuit d'un bobinage.

Il a été proposé de dimensionner le circuit électrique du bobinage de sorte à ce que ce circuit tolère un courant d'intensité élevée, en ajoutant de la masse de cuivre au niveau du bobinage et/ou en renforçant l'isolation. Cette solution augmente cependant l'impact en masse de la machine électrique et complexifie la fabrication des bobinages.

Une autre solution existante consiste à réaliser un découplage mécanique momentané entre le rotor de la machine électrique et l'arbre de puissance de la machine thermique qui entraîne le rotor. Le découplage est par exemple mis en œuvre par un embrayage ou un crabot, pour permettre un arrêt d'urgence de la rotation du rotor. Une solution de ce type est décrite dans la demande de brevet FR 3 057 029 au nom de la Demanderesse, notamment à la Figure 2 où est représenté un dispositif de désaccouplement 23 entre une génératrice électrique et un arbre porte-hélice. Toutefois, un tel dispositif est massif et diminue la charge utile transportable de l'aéronef.

Dans des cas extrêmes, il est également possible d'arrêter complètement la machine thermique qui entraîne le rotor. Toutefois, si ladite machine thermique assure aussi le déplacement de l'hélice de l'hélicoptère, il n'est pas envisageable de l'arrêter en cours de vol.

Il a également été envisagé de remplacer la machine synchrone à aimants permanents par une machine à rotor bobiné, qui présente l'avantage de permettre l'annulation rapide du flux magnétique excitateur tournant en coupant l'alimentation des bobines du rotor. Cependant, la présence de bagues de frottement au niveau du rotor limite la vitesse du rotor. C'est pourquoi la densité massique de puissance d'une machine à rotor bobiné n'est pas comparable à la puissance d'une machine à aimants permanents. Le document US2006186754 divulgue une machine électrique associée.

### DESCRIPTION GENERALE DE L'INVENTION

Il existe donc un besoin pour une machine électrique destinée à être embarquée dans un aéronef, dans laquelle un événement de défaillance des bobinages n'expose pas les bobinages à un risque d'endommagement.

On cherche en particulier à éviter une élévation trop importante de l'intensité du courant électrique induit en cas de court-circuit du bobinage.

La machine recherchée doit respecter les contraintes propres au domaine de l'aéronautique, et ainsi avoir un impact minime en masse et en encombrement de l'aéronef.

La solution recherchée doit aussi avoir un impact minime sur la charge utile transportable au sein de l'aéronef.

A ce titre, un premier objet de l'invention est une machine électrique pour un aéronef, comprenant un stator et un rotor mobile en rotation par rapport au stator, le rotor ou le stator comprenant une pluralité d'aimants permanents,
la machine comprenant un dispositif de démagnétisation d'un aimant permanent adapté pour mettre en œuvre une élévation temporaire de température de l'aimant permanent,
afin de limiter, pendant l'élévation temporaire de température, un flux magnétique excitateur généré par l'aimant permanent.

La machine électrique selon l'invention comprend un dispositif de démagnétisation qui permet une diminution rapide du flux magnétique excitateur généré par un aimant, par élévation de sa température. On tire avantageusement profit de la propriété intrinsèque de désaimantation des matériaux magnétiques lors d'une élévation de température. Par « désaimantation » on entend une annulation de l'induction magnétique de l'aimant.

En particulier, il existe une température seuil, dite température de Curie, qui annule l'induction magnétique d'un aimant permanent.

Le flux magnétique généré par l'aimant peut ainsi être rapidement réduit en cas de défaillance d'un bobinage. Le laps de temps pendant lequel la force contre-électromotrice aux bornes du bobinage reste élevée, alors que le bobinage est défaillant, est considérablement réduit.

De préférence, chaque aimant permanent de la machine est associé à un dispositif de démagnétisation, afin de permettre une diminution rapide du flux magnétique excitateur total des aimants.

Des caractéristiques optionnelles et non limitatives de la machine électrique de l'invention sont les suivantes, prises seules ou en l'une quelconque des combinaisons techniquement possibles :
- le dispositif de démagnétisation est configuré pour faire circuler un fluide chaud au voisinage ou au sein de l'aimant permanent.
- le dispositif de démagnétisation comprend une conduite, une partie terminale de la conduite débouchant sur la surface de l'aimant permanent ou dans un volume interne de l'aimant permanent.

Un avantage de cette variante est la masse faible de la conduite, avec un impact réduit sur la charge utile transportable.
- une portion de la conduite s'étend perpendiculairement à un axe d'un arbre du rotor depuis l'extérieur de la machine électrique jusqu'à une surface intérieure du stator.
- une portion de la conduite s'étend le long d'un axe d'un arbre du rotor, la partie terminale de la conduite s'étendant dans le rotor depuis ladite portion vers l'aimant permanent.
- la machine électrique est du type à flux radial, le rotor étant de forme cylindrique.
- la machine électrique est du type à flux axial, le rotor étant de forme discoïde.
- l'aimant permanent présente une température de Curie et le dispositif de démagnétisation est adapté pour mettre en œuvre une élévation de temporaire de température de l'aimant permanent au-delà de la température de Curie.
- la machine électrique comprend en outre un bobinage agencé pour qu'un courant électrique induit circule dans le bobinage sous l'effet d'un flux magnétique excitateur produit par l'aimant permanent lors de la rotation du rotor,
   la machine comprenant en outre un capteur de défaut du bobinage, le dispositif de démagnétisation étant configuré pour mettre en œuvre l'élévation de température de l'aimant permanent lors d'une détection d'un défaut du bobinage.

Un deuxième objet de l'invention est un ensemble comprenant une machine électrique telle que définie ci-avant, ainsi qu'une source de fluide chaud, adaptée pour fournir du fluide chaud au dispositif de démagnétisation de la machine électrique.

Des caractéristiques possibles et non limitatives de cet ensemble sont les suivantes, prises seules ou en l'une quelconque des combinaisons possibles :
- l'ensemble comprend en outre un échangeur de chaleur gaz/gaz ou gaz/liquide, l'échangeur de chaleur étant positionné entre la source de fluide chaud et la machine électrique.
- l'ensemble comprend une turbomachine ayant une veine de gaz qui sert de source de fluide chaud lors du fonctionnement de la turbomachine, et comprend un élément de prélèvement de gaz chaud dans la veine de gaz.
- l'élément de prélèvement est adapté pour admettre du gaz chaud depuis un plan de prélèvement défini perpendiculairement à un axe de la turbomachine, le plan de prélèvement étant pris parmi :
   un plan dit plan P3, s'étendant sur une sortie d'un étage final de compresseur de la turbomachine, l'étage final étant situé immédiatement en amont d'une chambre de combustion de la turbomachine ;
   un plan dit plan P2.5, s'étendant sur une sortie d'un étage de compresseur de la turbomachine différent de l'étage final de compresseur.
- l'élément de prélèvement est adapté pour admettre du gaz chaud depuis un point de prélèvement situé dans une tuyère d'échappement de la turbomachine.
- l'ensemble comprend en outre un dispositif d'aspiration au voisinage de l'élément de prélèvement.
- la turbomachine est adaptée pour entraîner le rotor de la machine électrique de l'ensemble.

L'invention concerne également un aéronef comprenant un ensemble défini ci-avant, l'aéronef étant typiquement un hélicoptère ou un aéronef à génération hybride thermique/électrique.

### DESCRIPTION GENERALE DES FIGURES

D'autres caractéristiques, buts et avantages de l'invention ressortiront de la description ci-après, qui est purement illustrative et non limitative, accompagnée de la Figure 1 déjà présentée ci-avant ainsi que des autres dessins annexés parmi lesquels :
La Figure 2 est une vue schématique en coupe longitudinale d'une machine synchrone à aimants permanents selon un premier mode de réalisation de l'invention ;
La Figure 3 représente, en coupe longitudinale, une turbomachine d'hélicoptère configurée pour entraîner le rotor de la machine synchrone de la Figure 2 et pour fournir du gaz chaud à un dispositif de démagnétisation de la machine synchrone de la Figure 2 ;
La Figure 4 est une courbe caractéristique de la démagnétisation d'un aimant permanent particulier, représentant en abscisse le champ démagnétisant et en ordonnée l'induction de l'aimant permanent ;
La Figure 5 est une vue schématique en coupe longitudinale d'une machine synchrone à aimants permanents selon un deuxième mode de réalisation de l'invention.

### DESCRIPTION DETAILLEE DE MODES DE REALISATION

La description ci-après décrit des exemples de machine synchrone à aimants permanents, dans laquelle les aimants permanents sont situés sur le rotor et entraînés en rotation par rapport au stator.

Les exemples ci-après concernent une machine synchrone en fonctionnement générateur, le rotor étant entraîné en rotation pour entrer en interaction avec le stator et produire de l'énergie électrique. Par ailleurs, on décrit ci-après une machine synchrone à flux radial dans laquelle le rotor est de forme globale cylindrique et positionné à l'intérieur du stator.

Toutefois, l'invention s'applique, avec les mêmes avantages, au cas d'une machine dans laquelle les aimants permanents sont fixes et situés au stator et/ou au cas où la machine électrique est à flux axial. Plus généralement, l'invention peut trouver une application dans toute machine électrique comportant un nombre quelconque d'aimants.

On notera également que, si le dispositif de démagnétisation est activé principalement dans des situations de défaut d'un bobinage dans les exemples ci-après, on peut envisager de déclencher le dispositif de démagnétisation pour tout autre événement qui crée une nécessité de diminuer rapidement le flux magnétique généré par les aimants.

Dans la description ci-après et sur les figures annexées, des éléments similaires sont désignés par les mêmes références alphanumériques.

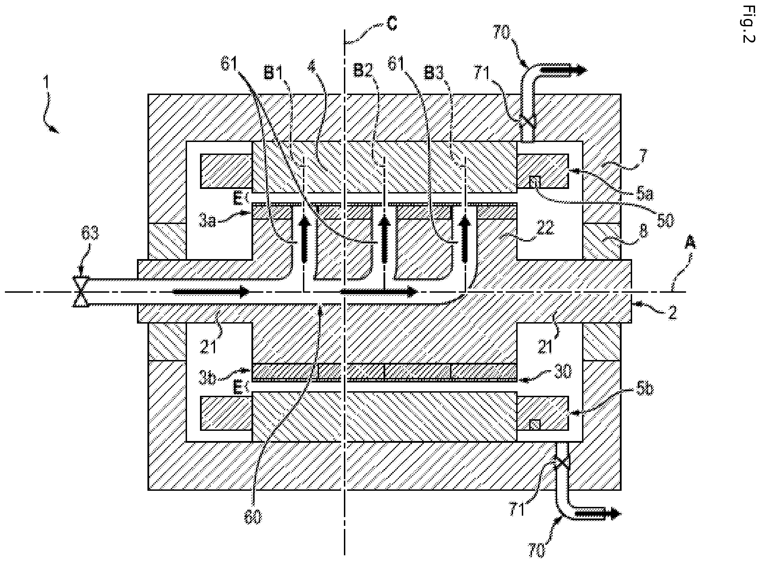

On a représenté en **Figure 2** une machine synchrone 1 à aimants permanents, selon un premier mode de réalisation de l'invention. La machine 1 est ici utilisée comme génératrice électrique pour un hélicoptère. Elle pourrait toutefois être utilisée dans un autre type d'aéronef, notamment un aéronef à génération hybride thermique/électrique. Sur la Figure 2, la machine 1 est vue en coupe longitudinale selon un plan passant par l'axe A de l'arbre du rotor 2.

Pour une meilleure compréhension des figures, on a représenté un plan de coupe C perpendiculaire à l'axe A. Une vue en coupe transversale (non représentée sur les figures annexées) selon le plan de coupe C donnerait une structure générale similaire à celle de la Figure 1 représentant une machine de l'art antérieur.

Dans un exemple d'architecture de l'hélicoptère, la machine 1 est intégrée au sein d'une PAGB, ou « Power Accessories Gear Box ». La machine 1 peut par exemple être positionnée dans l'aéronef conformément à l'architecture décrite dans la demande de brevet FR 3 057 029 au nom de la Demanderesse.

La machine 1 comprend un stator 4 et un rotor 2 mobile par rapport au stator 4. L'arbre du rotor 2 est entraîné en rotation par un arbre de puissance d'une turbomachine située dans l'hélicoptère. La machine 1 est à flux radial, le rotor 2 étant globalement cylindrique et positionné à l'intérieur du stator 4. Le rotor et le stator sont disposés dans un boîtier 7 qui délimite la machine électrique. En alternative, la machine pourrait être à flux axial et le rotor 2 pourrait être de type discoïde.

Dans une configuration possible, l'arbre du rotor 2 de la machine électrique 1 est entraîné par une turbine à gaz. La machine 1 est alors montée sur une boîte de transmission entraînée par un arbre de prise d'énergie relié à l'arbre principal de la turbine à gaz.

Le rotor comprend une pluralité d'aimants permanents 3. Ici, le rotor comprend quatre aimants dont deux aimants Nord diamétralement opposés et deux aimants Sud diamétralement opposés.

Les aimants 3 sont ici répartis régulièrement en surface sur la partie centrale 22 de l'arbre du rotor, deux aimants consécutifs étant séparés de 90°. La partie centrale de l'arbre du rotor présente un rayon plus important par rapport aux parties extrémales 21 de l'arbre. Des aimants 3a (en haut) et 3b (en bas) sont visibles sur la vue de la Figure 2.

On comprendra que d'autres géométries des aimants peuvent être envisagées : aimants radiaux ou orthoradiaux, aimants enterrés, aimants insérés en cage d'écureuil pour démarrage asynchrone...

La machine étant à flux radial, le stator 4 présente une forme générale de cylindre creux. Des pôles magnétiques, régulièrement répartis sur la surface interne du stator, s'étendent en direction du rotor. Un bobinage, comprenant par exemple du fil de cuivre, est enroulé autour de chacun des pôles magnétiques. Un courant électrique peut circuler à l'intérieur de chaque bobinage.

Une frette cylindrique 30 est disposée en surface de chacun des aimants, pour maintenir les aimants. Une distance E, nommée entrefer, sépare la surface extérieure des frettes et la périphérie intérieure des pôles du stator 4. De préférence, l'entrefer E est compris entre 0,5 millimètre et 10 millimètres. Ici, il n'y a pas de bague de frottement.

A la position angulaire du rotor représentée en Figure 2, l'aimant 3a se trouve à proximité d'un bobinage 5a et l'aimant 3b se trouve à proximité d'un bobinage 5b.

Le boîtier 7 est de forme générale cylindrique. Il est perforé selon l'axe A pour insertion du rotor 2. Le stator 4 est solidaire du boîtier 7. Le rotor 2 est supporté par des paliers 8 dans sa rotation par rapport à l'ensemble formé par le stator 4 et le boîtier 7.

Conformément à l'invention, la machine 1 comprend un dispositif de démagnétisation de l'aimant permanent 3a. Le dispositif de démagnétisation a pour fonction de mettre en œuvre, sur commande, une élévation temporaire de température de l'aimant permanent 3a. L'élévation temporaire de température limite le flux magnétique excitateur généré par les interactions entre le champ magnétique de l'aimant 3a en mouvement et le champ magnétique des bobinages du stator.

En effet, une augmentation de température de l'aimant 3a diminue le champ coercitif de l'aimant, soit le niveau de champ démagnétisant qui annule son induction magnétique. Au-delà d'une température de Curie de l'aimant, l'induction magnétique de l'aimant est annulée même en l'absence de champ démagnétisant.

Par « induction magnétique », on entend la densité volumique de moment magnétique caractéristique du comportement magnétique de l'aimant, dont dépend le flux magnétique excitateur généré par le mouvement relatif de l'aimant et du stator. Le « champ démagnétisant » est alors le champ magnétique à appliquer à l'aimant pour annuler son induction magnétique.

Dans l'exemple de la Figure 2, le dispositif de démagnétisation est configuré pour faire circuler un fluide chaud au voisinage de l'aimant permanent 3a. Plus précisément, le dispositif de démagnétisation comprend une conduite 60, se prolongeant en une pluralité de parties terminales 61 de conduite, dont des axes respectifs B1, B2 et B3 sont parallèles entre eux. Chacune des parties terminales de conduite débouche au sein du volume interne de l'aimant 3a.

Le volume interne de l'aimant 3a est en communication de fluide avec l'extrémité gauche de la conduite 60. Ainsi, la conduite 60 et les parties terminales 61 ménagent un passage pour recevoir du fluide chaud, typiquement de l'air chaud, depuis une source extérieure à la machine électrique, et pour amener ce fluide chaud à proximité de l'aimant.

L'ensemble de conduites permet d'amener un débit de fluide chaud au plus près de l'aimant 3a.

Dans l'exemple de la Figure 2, la conduite 60 s'étend le long de l'axe A de l'arbre du rotor. L'extrémité gauche de la conduite passe par l'extrémité gauche de l'arbre du rotor sur la Figure 2. La conduite se prolonge jusqu'à un plan proche de l'extrémité droite de la partie centrale 22 de l'arbre du rotor 2.

L'ensemble de conduites décrit ci-avant constitue un dispositif de démagnétisation forcée de l'aimant permanent 3a.

Dans une variante avantageuse, l'aimant permanent 3a est parcouru par un ou plusieurs canaux internes adaptés pour admettre un fluide, par exemple un fluide caloporteur. On favorise ainsi les échanges thermiques dans le volume interne de l'aimant, ce qui diminue le temps de réponse de l'aimant face à l'apport de chaleur du dispositif de démagnétisation. On accélère ainsi la désaimantation. Ces canaux internes s'étendent par exemple longitudinalement dans le volume interne de l'aimant, selon une direction sensiblement parallèle à l'axe A.

De plus, on notera qu'il est possible de compléter l'action du dispositif de démagnétisation par l'action d'un flux magnétique au niveau du stator, pour créer un champ démagnétisant.

De préférence, une vanne 63 est disposée à l'extrémité gauche de la conduite 60, pour contrôler une admission de fluide chaud. La vanne 63 est contrôlable électroniquement, par exemple par un calculateur embarqué dans l'hélicoptère. La vanne 63 peut être une vanne de type « tout ou rien » ou une vanne proportionnelle.

Lorsque du fluide chaud est admis par la conduite 60, ce fluide chaud transmet de la chaleur au volume interne de l'aimant 3a pour déclencher une montée en température de l'aimant.

Pour l'évacuation du fluide chaud à l'intérieur du boîtier 7, il est avantageux de placer des conduites 70 d'évacuation dont une première extrémité débouche au sein du volume interne du boîtier et dont une deuxième extrémité débouche hors du boîtier. L'activation de l'évacuation est contrôlable par des vannes d'évacuation 71 reliées au calculateur de l'hélicoptère. Les conduites 70 permettent d'éviter une surpression au sein du boîtier 7.

En fonctionnement générateur, un courant électrique induit circule dans le bobinage 5a sous l'effet du flux magnétique excitateur des aimants et notamment de l'aimant 3a. En cas de court-circuit du bobinage 5a, si les aimants continuent de tourner (et donc de produire un flux magnétique), un courant induit d'intensité très élevée, supérieure à un seuil d'endommagement du bobinage pouvant atteindre plusieurs centaines d'Ampères, peut circuler dans le bobinage.

De manière avantageuse, la machine 1 comprend un capteur 50 d'endommagement du bobinage. Le capteur 50 est apte à communiquer des données à un calculateur de l'hélicoptère. Le dispositif de démagnétisation est configuré (via la vanne 63) pour déclencher l'élévation de température de l'aimant permanent 3a en cas de risque d'endommagement du bobinage, par exemple lors d'un événement de court-circuit. On peut ainsi protéger le bobinage en court-circuit.

Dans une configuration préférentielle, chacun des aimants permanents 3 de la machine 1 peut être chauffé par un dispositif de démagnétisation. Par exemple, la conduite 60 peut se prolonger en d'autres parties terminales (non représentées) débouchant au voisinage de chacun des aimants permanents, notamment au voisinage de l'aimant permanent 3b.

Un avantage de cette variante est de permettre de limiter, voire d'annuler complètement, le courant induit généré par l'ensemble des aimants permanents dans les bobinages.

De préférence, chaque bobinage de la machine électrique dispose d'un capteur d'endommagement, afin de pouvoir protéger chacun des bobinages en cas de court-circuit.

Dans une variante possible (non représentée sur les figures), le dispositif de démagnétisation peut être relié à un échangeur de chaleur gaz/gaz ou gaz/liquide, le gaz étant par exemple de l'air, le liquide étant par exemple de l'huile, du carburant ou de l'eau. L'échangeur de chaleur est alors placé entre la source de fluide chaud (un turbomoteur dans l'exemple ci-après) et la machine électrique. L'échangeur de chaleur permet de maîtriser et d'adapter la température d'entrée du fluide admis depuis la source externe de chaleur dans la machine électrique.

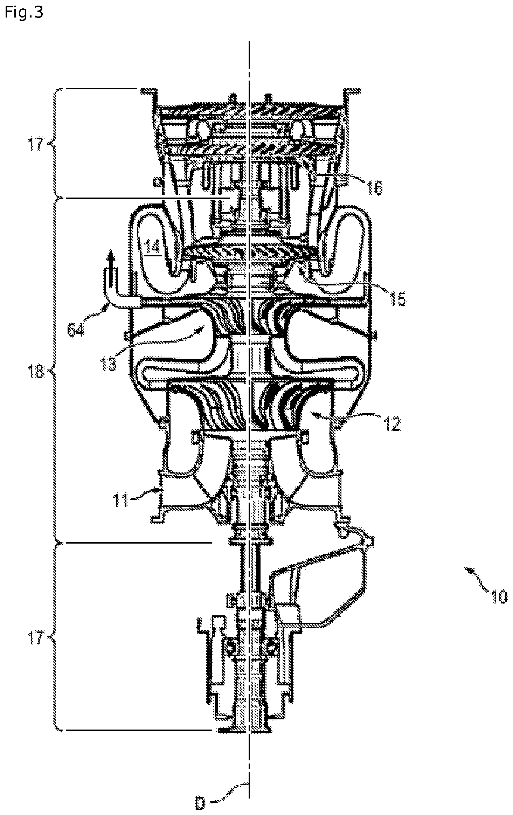

La **Figure 3** est une vue en coupe schématique d'un turbomoteur 10 d'hélicoptère. Le turbomoteur 10 comprend un rotor d'axe D qui entraîne le rotor 2 de la machine électrique 1 de la Figure 2. Dans cet exemple, le turbomoteur 10 est un turbomoteur à plusieurs étages et à compresseur centrifuge.

Le turbomoteur comprend, dans l'ordre d'écoulement de l'air lorsque le turbomoteur est en fonctionnement, une entrée d'air 11, un premier compresseur centrifuge 12, un deuxième compresseur centrifuge 13, une chambre de combustion 14, une turbine de générateur de gaz 15 et une turbine libre 16.

Le turbomoteur 10 est ici à double corps. Il comprend un premier corps 17 correspondant à la turbine libre 16 et un deuxième corps 18 correspondant aux compresseurs et à la turbine de générateur de gaz.

Le turbomoteur 10 comprend une veine de gaz formant un chemin d'écoulement de l'air admis au niveau de l'entrée 11, jusqu'à la tuyère d'échappement (non représentée) en sortie de la turbine libre 16.

De manière très avantageuse, en cours de fonctionnement du turbomoteur, la veine de gaz sert de source de fluide chaud pour alimenter le dispositif de démagnétisation de l'aimant permanent 3a.

Dans l'exemple de la Figure 3, un élément 64 de prélèvement de gaz est positionné dans la veine de gaz du turbomoteur 10, pour prélever du gaz chaud dans la veine et le fournir à la conduite 60. L'élément 64 est positionné en série avec une extrémité de la conduite 60. L'élément 64 est ici une conduite connectée d'une part à la veine de gaz du turbomoteur 10 et d'autre part à la conduite 60 représentée en Figure 2.

L'élément 64 est avantageusement agencé en sortie d'un compresseur du turbomoteur 10, de sorte à récupérer de l'air chaud qui a préalablement été comprimé par les organes du turbomoteur.

Dans l'exemple de la Figure 3, l'élément 64 débouche sur la veine du turbomoteur 10 au niveau du plan (couramment appelé « plan P3 ») perpendiculaire à l'axe D et passant par la sortie du deuxième compresseur centrifuge 13. Le deuxième compresseur centrifuge 13 étant situé immédiatement en amont de la chambre de combustion 14, un avantage de cette configuration est de récupérer le gaz à une température très élevée.

En alternative ou en combinaison, le prélèvement de gaz peut être effectué sur le plan (couramment appelé « plan P2 ou P2.5 ») perpendiculaire à l'axe D et passant par la sortie du premier compresseur centrifuge 12, et /ou sur une tuyère d'échappement de la turbomachine (plans P5 et/ou P6). De façon optionnelle, un dispositif d'aspiration est ajouté sur le point de prélèvement de gaz au voisinage de l'élément 64. Le dispositif d'aspiration est notamment avantageux si le gaz chaud est prélevé à des niveaux de pression faibles, par exemple au niveau de la tuyère d'échappement.

En alternative, le prélèvement de gaz peut être réalisé sur une veine d'un autre type de turbomachine pour alimenter le dispositif de démagnétisation de l'aimant permanent.

Il est avantageux d'utiliser une turbomachine de l'hélicoptère comme source de chaleur pour le dispositif de démagnétisation, car cette source de chaleur existe déjà même en l'absence du dispositif de démagnétisation. On réalise ainsi une synergie entre la fonction d'entraînement du rotor de la machine électrique et la fonction de démagnétisation forcée des aimants. De plus, un prélèvement de gaz chaud sur une turbomachine présente un impact faible sur la masse totale et sur la fiabilité de l'ensemble propulsif.

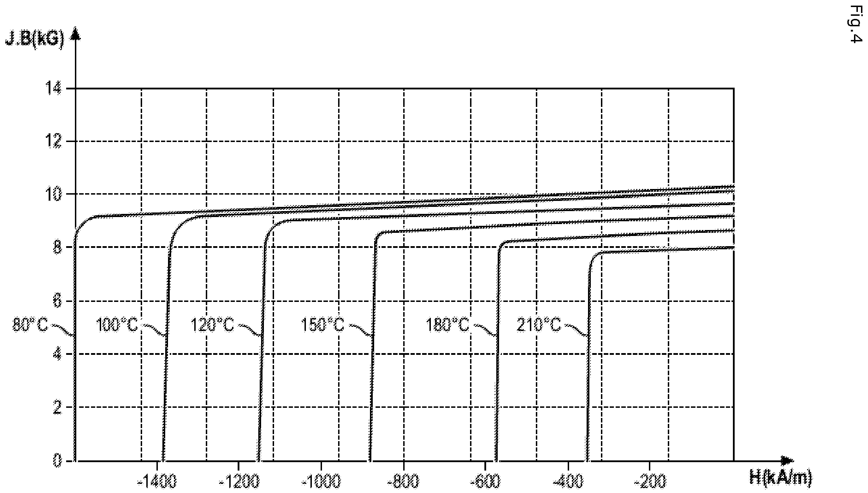

On a représenté en **Figure 4** des courbes caractéristiques de l'induction magnétique d'un matériau magnétique de l'aimant 3a, en fonction de la température du matériau magnétique. Dans cet exemple, le matériau magnétique est du Nd₂Fe₁₄B. L'induction magnétique J.B, donnée ici en kiloGauss, diminue à mesure que le champ démagnétisant H, donné ici en kiloampères par mètre, augmente en valeur absolue. A mesure que la température augmente, l'induction magnétique est annulée pour une valeur absolue de champ démagnétisant de plus en plus faible (environ 1380 kA/m pour 100°C, environ 360 kA/m pour 210°C).

Comme indiqué ci-avant, au-delà d'une température de Curie de l'aimant, son induction magnétique est annulée même en l'absence de champ démagnétisant.

A titre d'exemples, on donne les températures de Curie de plusieurs matériaux magnétiques : de 140°C à 220°C pour le NdFeB, 280°C pour le SmCo₅, de 350°C à 550°C pour le Sm₂Co₁₇, 550°C pour l'AlNiCo, 250°C pour les ferrites de type Strontium, de 100°C à 240°C pour les ferrites de type Baryum.

Le dispositif de démagnétisation de la machine électrique 1 est, de préférence, adapté pour mettre en œuvre une élévation de température de l'aimant permanent auquel il est associé, au-delà d'une température déterminée en fonction de la température de Curie de l'aimant.

Par exemple, le dispositif de démagnétisation est paramétré pour faire atteindre à l'aimant une température comprise entre 95% et 105% de sa température de Curie, afin de limiter fortement l'induction magnétique de l'aimant.

De préférence, le dispositif de démagnétisation permet à l'aimant d'atteindre la température de Curie, ce qui annule son induction magnétique.

En effet, le cas où l'aimant est à 100% de sa température de Curie permet une efficacité optimale de démagnétisation de l'aimant permanent, en l'absence de tout champ démagnétisant extérieur.

Ainsi, le dispositif de démagnétisation fournit un moyen d'annuler temporairement et rapidement le flux magnétique généré par la rotation de l'aimant, même si l'aimant continue de tourner. On peut ainsi protéger un bobinage pendant un événement de court-circuit.

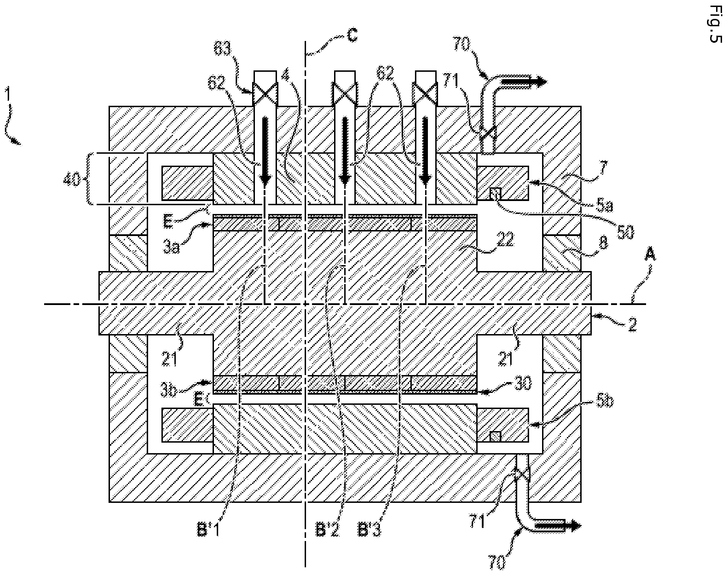

La **Figure 5** donne une vue en coupe longitudinale d'une machine synchrone 1' à aimants permanents, selon un deuxième mode de réalisation de l'invention. Le plan de coupe passe par l'axe A de l'arbre du rotor 2.

La structure interne de la machine 1', et en particulier l'agencement du rotor 2 et du stator 4, sont conformes à la description ci-avant en relation à la machine 1 de la Figure 2.

A la place de la conduite 60, la machine 1' comprend une pluralité de conduites 62. De même que la conduite 60, les conduites 62 mettent en communication de fluide une source de fluide chaud extérieure à la machine électrique et un volume situé au voisinage de l'aimant permanent 3a. Ici, les conduites 62 s'étendent respectivement selon des axes B1, B2 et B3 parallèles entre eux et perpendiculaires à l'axe A de l'arbre du rotor.

Chacune des conduites 62 s'étend depuis l'extérieur du boîtier 7 jusqu'à la surface intérieure du stator 4, à travers le boîtier 7 et à travers le stator 4. Les conduites 62 traversent le stator 4 par des orifices traversants 40.

Des extrémités des conduites 62 débouchent ainsi sur la surface de l'aimant permanent 3a.

Des vannes 63 sont de préférence disposées aux extrémités extérieures des conduites 62, pour contrôler une admission de fluide chaud par ces conduites. Ces vannes sont contrôlables électroniquement, par exemple par un calculateur embarqué dans l'hélicoptère.

En alternative, on pourrait utiliser une seule conduite 62 ou un nombre quelconque de conduites.

Il est possible d'utiliser les conduites 62 à la place ou en complément des conduites 60 présentant les parties terminales 61. Une structure combinant les deux orientations de conduites permet d'apporter un débit total de fluide chaud plus important au voisinage du ou des aimants permanents, ce qui accélère la montée en température.

Le jet de gaz chauds peut ainsi être réalisé axialement et/ou radialement par rapport à l'axe A de l'arbre du rotor.

Plus généralement, la forme et l'agencement des conduites du dispositif de démagnétisation peut être adaptée en fonction de la structure de la machine électrique, des contraintes de masse et d'encombrement ou du besoin de montée en température des aimants.

On n'utilise pas nécessairement un fluide chaud comme source de chaleur pour le dispositif de démagnétisation. De nombreux types de source de chaleur peuvent être envisagés. On peut notamment remplacer la conduite 60 par une résistance électrique, la résistance étant positionnée au voisinage de l'aimant permanent dont on souhaite annuler le flux magnétique.

## Revendications

1. Machine électrique pour un aéronef, comprenant un stator (4) et un rotor (2) mobile en rotation par rapport au stator (4), le rotor ou le stator comprenant une pluralité d'aimants permanents,
la machine étant **caractérisée en ce qu'**elle comprend un dispositif de démagnétisation d'un aimant permanent (3a) adapté pour mettre en œuvre une élévation temporaire de température de l'aimant permanent, afin de limiter, pendant l'élévation temporaire de température, un flux magnétique excitateur généré par l'aimant permanent (3a).

2. Machine électrique selon la revendication 1, dans laquelle le dispositif de démagnétisation est configuré pour faire circuler un fluide chaud au voisinage de l'aimant permanent (3a) ou au sein de l'aimant permanent.

3. Machine électrique selon la revendication 2, dans laquelle le dispositif de démagnétisation comprend une conduite (60), une partie terminale (61) de la conduite débouchant sur la surface de l'aimant permanent (3a) ou dans un volume interne de l'aimant permanent (3a).

4. Machine électrique selon la revendication 3, dans laquelle une portion de la conduite (60) s'étend le long d'un axe (A) d'un arbre du rotor (2), la partie terminale (61) de la conduite s'étendant dans le rotor (2) depuis ladite portion vers l'aimant permanent (3a).

5. Machine électrique selon la revendication 3, dans laquelle une portion (62) de la conduite s'étend perpendiculairement à un axe (A) d'un arbre du rotor (2), depuis l'extérieur de la machine électrique jusqu'à une surface intérieure du stator (4).

6. Machine électrique selon l'une quelconque des revendications 1 à 5, la machine électrique étant du type à flux radial, le rotor (2) étant de forme cylindrique.

7. Machine électrique selon l'une quelconque des revendications 1 à 5, la machine électrique étant du type à flux axial, le rotor étant de forme discoïde.

8. Machine électrique selon l'une quelconque des revendications 1 à 7, dans laquelle l'aimant permanent présente une température de Curie et le dispositif de démagnétisation est adapté pour mettre en œuvre une élévation de temporaire de température de l'aimant permanent (3a) au-delà de la température de Curie.

9. Machine électrique selon l'une quelconque des revendications 1 à 8, comprenant en outre un bobinage (5a) agencé pour qu'un courant électrique induit circule dans le bobinage (5a) sous l'effet d'un flux magnétique excitateur produit par l'aimant permanent (3a) lors de la rotation du rotor (2),
la machine comprenant en outre un capteur (50) de défaut du bobinage, le dispositif de démagnétisation étant configuré pour mettre en œuvre l'élévation de température de l'aimant permanent lors d'une détection de défaut du bobinage.

10. Ensemble comprenant une machine électrique (1) selon l'une quelconque des revendications 1 à 9 et une source de fluide chaud, ladite source étant adaptée pour fournir du fluide chaud au dispositif de démagnétisation de la machine électrique.

11. Ensemble selon la revendication 10, comprenant en outre un échangeur de chaleur gaz/gaz ou gaz/liquide, l'échangeur de chaleur étant positionné entre la source de fluide chaud et la machine électrique.

12. Ensemble selon l'une quelconque des revendications 10 ou 11, comprenant une turbomachine (10), la turbomachine comprenant une veine de gaz servant de source de fluide chaud lors du fonctionnement de la turbomachine, et comprenant un élément (64) de prélèvement de gaz chaud dans la veine de gaz.

13. Ensemble selon la revendication 12, dans lequel l'élément de prélèvement est adapté pour admettre du gaz chaud depuis un plan de prélèvement défini perpendiculairement à un axe (D) de la turbomachine, le plan de prélèvement étant pris parmi :
- un plan dit plan P3, s'étendant sur une sortie d'un étage final (13) de compresseur de la turbomachine, l'étage final étant situé immédiatement en amont d'une chambre de combustion (14) de la turbomachine ;
- un plan dit plan P2.5, s'étendant sur une sortie d'un étage (12) de compresseur de la turbomachine différent de l'étage final de compresseur.

14. Ensemble selon la revendication 12, dans lequel l'élément de prélèvement est adapté pour admettre du gaz chaud depuis un point de prélèvement situé dans une tuyère d'échappement de la turbomachine.

15. Aéronef comprenant un ensemble selon l'une quelconque des revendications 10 à 14, l'aéronef étant par exemple un hélicoptère ou un aéronef à génération hybride thermique/électrique.

## Patentansprüche

1. Elektrische Maschine für ein Luftfahrzeug, umfassend einen Stator (4) und einen Rotor (2), der im Verhältnis zum Stator (4) drehbar ist, wobei der Rotor oder der Stator mehrere Permanentmagnete umfasst,
wobei die Maschine **dadurch gekennzeichnet ist, dass** sie eine Vorrichtung zum Entmagnetisieren eines Permanentmagneten (3a) umfasst, die dazu ausgelegt ist, einen vorübergehenden Temperaturanstieg des Permanentmagneten zu implementieren, um während des vorübergehenden Temperaturanstiegs einen durch den Permanentmagneten (3a) erzeugten anregenden Magnetfluss zu begrenzen.

2. Elektrische Maschine nach Anspruch 1, wobei die Vorrichtung zum Entmagnetisieren dazu ausgebildet ist, ein heißes Fluid in der Nähe des Permanentmagneten (3a) oder innerhalb des Permanentmagneten umzuwälzen.

3. Elektrische Maschine nach Anspruch 2, wobei die Vorrichtung zum Entmagnetisieren ein Rohr (60) umfasst, wobei ein Endteil (61) des Rohrs auf der Oberfläche des Permanentmagneten (3a) oder in ein Innenvolumen des Permanentmagneten (3a) mündet.

4. Elektrische Maschine nach Anspruch 3, wobei sich ein Abschnitt des Rohrs (60) entlang einer Achse (A) einer Welle des Rotors (2) erstreckt, wobei sich der Endteil (61) des Rohrs von dem Abschnitt zum Permanentmagneten (3a) in den Rotor (2) erstreckt.

5. Elektrische Maschine nach Anspruch 3, wobei sich ein Abschnitt (62) des Rohrs senkrecht zu einer Achse (A) einer Welle des Rotors (2) vom Äußeren der elektrischen Maschine zu einer Innenfläche des Stators (4) erstreckt.

6. Elektrische Maschine nach einem der Ansprüche 1 bis 5, wobei die elektrische Maschine vom Radialflusstyp ist und der Rotor (2) eine zylindrische Form aufweist.

7. Elektrische Maschine nach einem der Ansprüche 1 bis 5, wobei die elektrische Maschine vom Axialflusstyp ist und der Rotor scheibenförmig ist.

8. Elektrische Maschine nach einem der Ansprüche 1 bis 7, wobei der Permanentmagnet eine Curie-Temperatur aufweist und die Vorrichtung zum Entmagnetisieren dazu ausgelegt ist, eine vorübergehende Temperaturerhöhung des Permanentmagneten (3a) über die Curie-Temperatur hinaus zu implementieren.

9. Elektrische Maschine nach einem der Ansprüche 1 bis 8, ferner umfassend eine Spule (5a), die so angeordnet ist, dass ein induzierter elektrischer Strom in der Spule (5a) unter der Wirkung eines anregenden Magnetflusses fließt, der durch den Permanentmagneten (3a) während der Drehung des Rotors (2) erzeugt wird,
wobei die Maschine ferner einen Spulenfehlerdetektor (50) umfasst, wobei die Vorrichtung zum Entmagnetisieren dazu ausgebildet ist, um den Temperaturanstieg des Permanentmagneten bei Detektion eines Spulenfehlers zu implementieren.

10. Anordnung, die eine elektrische Maschine (1) nach einem der Ansprüche 1 bis 9 und eine Quelle des heißen Fluids umfasst, wobei die Quelle dazu ausgelegt ist, der Vorrichtung zum Entmagnetisieren der elektrischen Maschine heißes Fluid zuzuführen.

11. Anordnung nach Anspruch 10, ferner umfassend einen Gas/Gas- oder Gas/Flüssigkeits-Wärmetauscher, wobei der Wärmetauscher zwischen der Quelle des heißen Fluids und der elektrischen Maschine angeordnet ist.

12. Anordnung nach einem der Ansprüche 10 oder 11, die einen Turbinenmotor (10) umfasst, wobei der Turbinenmotor einen Gasstrom umfasst, der während des Betriebs des Turbinenmotors als Quelle des heißen Fluids dient, und ein Element (64) zur Probennahme von heißem Gas im Gasstrom umfasst.

13. Anordnung nach Anspruch 12, wobei das Element zur Probennahme dazu ausgelegt ist, heißes Gas von einem Probenentnahmebereich einzulassen, der senkrecht zu einer Achse (D) der Turbomaschine definiert ist, wobei der Probenentnahmebereich einer von Folgenden ist:
- einer als Bereich P3 bezeichneter Bereich, der sich über einem Auslass einer letzten Verdichterstufe (13) der Turbomaschine erstreckt, wobei die letzte Verdichterstufe unmittelbar stromaufwärts einer Verbrennungskammer (14) der Turbomaschine angeordnet ist;
- einer als Bereich P2.5 bezeichneter Bereich, der sich über einen Auslass einer Verdichterstufe (12) der Turbomaschine erstreckt, die sich von der letzten Verdichterstufe unterscheidet.

14. Anordnung nach Anspruch 12, wobei das Element zur Probenentnahme dazu ausgelegt ist, heißes Gas von einer Probenentnahmestelle einzulassen, die sich in einer Abgasdüse der Turbomaschine befindet.

15. Luftfahrzeug, das eine Anordnung nach einem der Ansprüche 10 bis 14 umfasst, wobei das Luftfahrzeug beispielsweise ein Helikopter oder ein Luftfahrzeug mit hybrider thermischer/elektrischer Erzeugung ist.

## Claims

1. An electrical machine for an aircraft, comprising a stator (4) and a rotor (2) rotatable relative to the stator (4), the rotor or stator comprising a plurality of permanent magnets,
the machine being **characterized in that** it comprises a permanent magnet demagnetizing device (3a) adapted to implement a temporary temperature increase of the permanent magnet, so as to limit, during the temporary temperature increase, an exciting magnetic flux generated by the permanent magnet (3a).

2. The electric machine of claim 1, wherein the demagnetizing device is configured to circulate a hot fluid in the vicinity of the permanent magnet (3a) or within the permanent magnet.

3. An electric machine according to claim 2, wherein the demagnetizing device comprises a duct (60), an end portion (61) of the duct leading to the surface of the permanent magnet (3a) or into an internal volume of the permanent magnet (3a).

4. An electric machine according to claim 3, wherein a portion of the duct (60) extends along an axis (A) of a shaft of the rotor (2), the end portion (61) of the duct extending into the rotor (2) from said portion towards the permanent magnet (3a).

5. An electric machine according to claim 3, wherein a portion (62) of the duct extends perpendicular to an axis (A) of a shaft of the rotor (2) from outside the electric machine to an inner surface of the stator (4).

6. An electric machine according to any one of claims 1 to 5, the electric machine being of the radial flux type, the rotor (2) having a cylindrical shape.

7. An electric machine according to any one of claims 1 to 5, the electric machine being of the axial flux type, the rotor being of discoidal shape.

8. An electrical machine according to any one of claims 1 to 7, wherein the permanent magnet has a Curie temperature and the demagnetizing device is adapted to implement a temporary temperature increase of the permanent magnet (3a) above the Curie temperature.

9. An electric machine according to any one of claims 1 to 8, further comprising a winding (5a) arranged so that an induced electric current flows in the winding (5a) under the effect of an exciting magnetic flux produced by the permanent magnet (3a) during rotation of the rotor (2),
the machine further comprising a winding fault sensor (50), the demagnetizing device being configured to implement the temperature increase of the permanent magnet upon detection of a winding fault.

10. An assembly comprising an electrical machine (1) according to any one of claims 1 to 9 and a source of hot fluid, said source being adapted to supply hot fluid to the demagnetizing device of the electrical machine.

11. The assembly of claim 10, further comprising a gas/gas or gas/liquid heat exchanger, the heat exchanger being positioned between the hot fluid source and the electrical machine.

12. An assembly according to any one of claims 10 or 11, comprising a turbomachine (10), the turbomachine comprising a gas stream serving as a source of hot fluid during operation of the turbomachine, and comprising an element (64) for bleeding hot gas from the gas stream.

13. The assembly of claim 12, wherein the bleed element is adapted to admit hot gas from a bleed plane defined perpendicular to an axis (D) of the turbomachine, the plan being taken from:
- a plane known as plane P3, extending over an outlet of a compressor final stage (13) of the turbomachine, the final stage being situated immediately upstream of a combustion chamber (14) of the turbomachine;
- a plane known as plane P2.5, extending over an outlet of a compressor stage (12) of the turbomachine different from the final compressor stage.

14. The assembly of claim 12, wherein the bleed element is adapted to admit hot gas from a bleed point in an exhaust nozzle of the turbomachine.

15. An aircraft comprising an assembly according to any one of claims 10 to 14, the aircraft being for example a helicopter or a hybrid thermal/electric generation aircraft.
